# EUROPEAN PATENT APPLICATION

(11) **EP 2 641 643 A1**
(43) Date of publication of application: **25.09.2013**
(21) Application number: 11841833.4
(22) Date of filing: 26.10.2011
(51) Int. Cl.: B01D 39/20, B28B 11/02, F01N 3/022

(54) **METHOD FOR PRODUCING HONEYCOMB STRUCTURES**

(30) Priority: 16.11.2010 JP 2010256019
(71) Applicant: Sumitomo Chemical Company, Limited, Tokyo 104-8260 (JP)
(72) Inventor: MORI Masaharu, Niihama-shi Ehime 792-8521 (JP); GONG Ying, Niihama-shi Ehime 792-8521 (JP)
(74) Representative: Vossius & Partner
(86) International application number: PCT/JP2011/074686
(87) International publication number: WO 2012/066916

(57) **Abstract**

To provide a method for manufacturing a honeycomb structure with which it is possible to flexibly cope with a change in the outer diameter of a honeycomb formed body including through-holes that should be plugged, a plugging failure less easily occurs, and it is possible to easily manufacture a honeycomb structure in which desired through-holes are plugged. The method for manufacturing a honeycomb structure includes a step for arranging a mask 170 including a plurality of openings 171 on an end face of a columnar honeycomb formed body 70 including a plurality of through-holes 71 such that the plurality of openings 171 are respectively opposed to the plurality of through-holes 71 of the honeycomb formed body 70 and arranging a ring 270 having an inner diameter substantially the same as the outer diameter of the honeycomb formed body 70 on a surface on the opposite side of the honeycomb formed body 70 side of the mask 170 to cover the openings 171 of the mask 170 located further on the outer side than the outer circumference of the honeycomb formed body 70 and a step of supplying a plugging material to the inner side of the ring 270 and filling the plugging material in the through-holes 71 of the honeycomb formed body 70 via the openings 171 of the mask 170.

## Description

### Technical Field

The present invention relates to a method for manufacturing a honeycomb structure.

### Background Art

A honeycomb filter structure has been widely known as a filter structure for a DPF (Diesel particulate filter) or the like. The honeycomb filter structure is manufactured by plugging, with a plugging material, a part of through-holes from one end face of a honeycomb formed body including a large number of through-holes and plugging, with the plugging material, the remaining through-holes from the other end face of the honeycomb formed body.

When only desired through-holes of the end face of the honeycomb formed body are plugged, a mask provided with openings in places corresponding to the through-holes that should be plugged is used. Patent Literatures 1 and 2 below describe methods for plugging a honeycomb formed body using a mask.

### Citation List

### Patent Literature

Patent Literature 1: Japanese Patent Application Laid-Open Publication No. 2004-290766
Patent Literature 2: Japanese Patent Application Laid-Open Publication No. 2008-132749

### Summary of Invention

### Technical Problem

In general, a honeycomb formed body is formed by extrusion molding. However, the outer diameter of the obtained honeycomb formed body is not always fixed. The outer diameter of the honeycomb formed body easily fluctuates because of occurrence of an extrusion failure, a change in an extrusion condition, a change in a constituent material, or the like. When the outer diameter of the honeycomb formed body including through-holes that should be plugged changes, during plugging, a plugging failure such as spreading-out of a plugging material, adhesion of the plugging material to the outer wall of the honeycomb formed body, or uneven injection of the plugging material or in that the through-holes that should be plugged are not plugged occurs.

The present invention has been devised in view of the problems and it is an object of the present invention to provide a method for manufacturing a honeycomb structure with which it is possible to flexibly cope with a change in the outer diameter of a honeycomb formed body including through-holes that should be plugged, a plugging failure less easily occurs, and it is possible to easily manufacture a honeycomb structure in which desired through-holes are plugged.

### Solution to Problem

In order to attain the object, the present invention provides a method for manufacturing a honeycomb structure including: a step for arranging a mask including a plurality of openings on an end face of a columnar honeycomb formed body including a plurality of through-holes such that the plurality of openings are respectively opposed to the plurality of through-holes of the honeycomb formed body and arranging a ring having an inner diameter substantially the same as the outer diameter of the honeycomb formed body on a surface on the opposite side of the honeycomb formed body side of the mask to cover the openings of the mask located further on the outer side than the outer circumference of the honeycomb formed body; and a step of supplying a plugging material to the inner side of the ring and filling the plugging material in the plurality of through-holes of the honeycomb formed body via the openings of the mask.

According to the method, during plugging, the ring having the inner diameter substantially the same as the outer diameter of the honeycomb formed body including the through-holes that should be plugged is used in combination with the mask. Consequently, it is possible to cope with a change in the outer diameter of the honeycomb formed body by selecting the shape of the ring to be used. Therefore, it is unnecessary to change the mask according to the change in the outer diameter of the honeycomb formed body. In the method, by adjusting the inner diameter of the ring to be used, it is possible to suppress a plugging failure such as spreading-out of a plugging material, adhesion of the plugging material to the outer wall of the honeycomb formed body, or uneven injection of the plugging material or in that the through-holes that should be plugged are not plugged. Further, it is possible to easily manufacture a honeycomb structure in which desired through-holes are plugged.

Compared with a mask including a large number of openings, manufacturing costs for the ring with simple structure are extremely low. Therefore, compared with the case in which the mask itself is changed according to a change in the outer diameter of the honeycomb formed body, it is possible to reduce the manufacturing costs for a honeycomb structure. Further, since the ring can be manufactured easily and at low costs, it is possible to prepare a large number of rings with different inner diameters and flexibly cope with a change in the outer diameter of the honeycomb formed body.

When the ring is arranged on the mask, a step equivalent to thickness of the ring is formed. An effect is obtained by the step in that a leak (diffusion) of the plugging material supplied to the inner side of the ring is suppressed, the plugging material is not wasted, and filling efficiency is improved. Further, since the mask strength is improved by being reinforced by the ring, it is possible to reduce the thickness and the weight of a mask main body. Therefore, it is possible to use a resin plate or a resin film in the mask main body. The arrangement of the ring makes it easy to distinguish the front and the back of the mask.

In the manufacturing method according to the present invention, it is preferable that the openings are provided at the circumferential edge portion of the mask in the same array as the through-holes of the honeycomb formed body, and the mask is arranged such that the circumferential edge portion of the mask is opposed to the circumferential edge portion of the honeycomb formed body.

Among the large number of through-holes included in the honeycomb formed body, The shape of the through-holes in the vicinity of the sidewall at the circumferential edge portion of the honeycomb formed body is affected by the sidewall of the honeycomb formed body. Therefore, in some case, the through-holes in the vicinity of the sidewall of the honeycomb formed body have an opening cross sectional area smaller than an opening cross sectional area of the through-holes formed in the center of the honeycomb formed body. The cross sectional shapes of such through-holes present in the vicinity of the sidewall of the honeycomb formed body and with the opening cross sectional area smaller than the opening cross sectional area of the through-holes formed in the center of the honeycomb formed body are represented as imperfect cross sectional shapes. To completely plug the through-holes with the imperfect cross sectional shapes and the through-holes adjacent to these, it is desirable to use the mask in which the openings at the circumferential edge portion are provided in the same array as the through-holes of the honeycomb formed body as mentioned above. That is, all the positions of the openings at the circumferential edge portion of the mask and all the positions of the through-holes at the circumferential edge portion of the honeycomb formed body coincide with each other. Therefore, it is possible to plug all the through-holes with the imperfect cross sectional shapes present at the circumferential edge portion of the honeycomb formed body and the through-holes adjacent to these.

The mask including the openings provided at the circumferential edge portion in the array explained above is used in conjunction with the ring, whereby the effect of the mask effectively appears. That is, although the openings at the circumferential edge portion of the mask are partially covered by the ring during plugging, since the inner diameter of the ring is substantially the same as the outer diameter of the honeycomb formed body, the shapes of the openings not covered by the ring at the circumferential edge portion of the mask are substantially the same as the cross sectional shapes of the through-holes with the imperfect cross sectional shapes present at the circumferential edge portion of the honeycomb formed body. Therefore, it is easy to plug the through-holes with the imperfect cross sectional shapes present at the circumferential edge portion of the honeycomb formed body and the through-holes adjacent to these. Further, it is unnecessary to process the shape of the openings at the circumferential edge portion of the mask in advance to match the shape of the through-holes with the imperfect cross sectional shapes of the honeycomb formed body. Even if the outer diameter of the honeycomb formed body fluctuates, it is possible to always obtain the effect by selecting the ring.

### Advantageous Effects of Invention

According to the present invention, it is possible to provide a method for manufacturing a honeycomb structure with which it is possible to flexibly cope with a change in the outer diameter of a honeycomb formed body including through-holes that should be plugged, a plugging failure less easily occurs, and it is possible to easily manufacture a honeycomb structure in which desired through-holes are plugged.

### Brief Description of Drawings

[Figure 1] Figure 1(a) is a perspective view of a honeycomb formed body plugged in a manufacturing method according to an embodiment of the present invention and Figure 1(b) is an enlarged view of a portion A of an end face shown in Figure 1(a).
[Figure 2] Figure 2(a) is a perspective view of a mask used in the manufacturing method according to the embodiment of the present invention and Figure 2(b) is an enlarged view of a portion B of the end face shown in Figure 2(a).
[Figure 3] Figure 3 is a perspective view of a ring used in the manufacturing method according to the embodiment of the present invention.
[Figure 4] Figure 4 is a perspective view showing an arrangement relation among the honeycomb formed body, the mask, and the ring in the manufacturing method according to the embodiment of the present invention.
[Figure 5] Figure 5(a) is a perspective view showing a state in which the mask and the ring are arranged on an end face of the honeycomb formed body in the manufacturing method according to the embodiment of the present invention and Figure 5(b) is an enlarged view of a portion C of the end face shown in Figure 5(a).

### Description of Embodiments

A preferred embodiment of the present invention is explained in detail below with reference to the drawings. In the following explanation, the same reference numerals and signs are used for the same or equivalent portions and redundant explanation of the portions is omitted. A positional relation such as up, down, left, and right is based on a positional relation shown in the drawings unless specifically noted otherwise. Further, a dimension ratio of the drawings is not limited to an illustrated ratio.

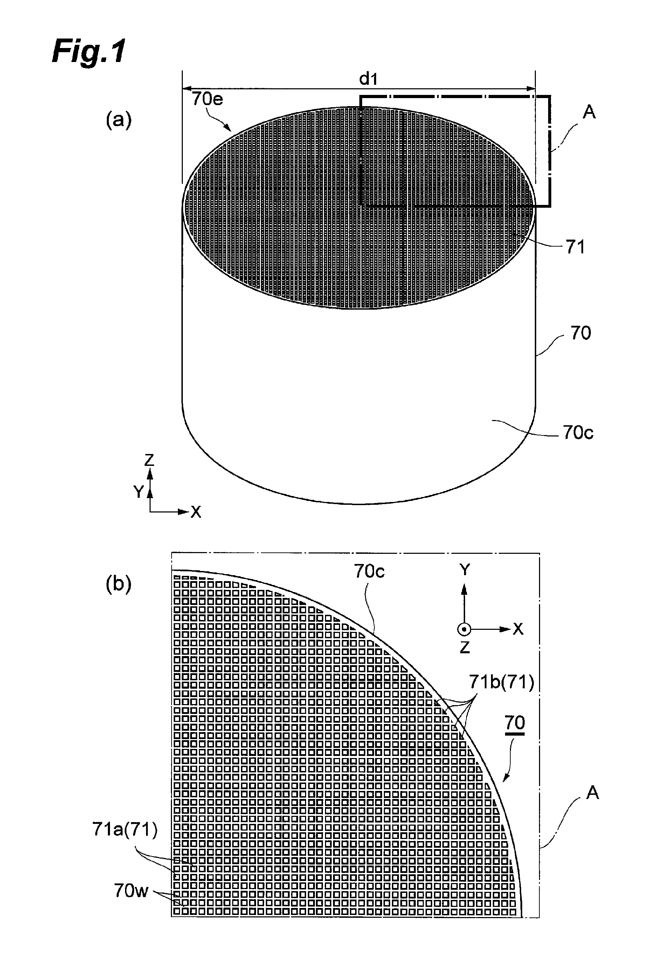

As shown in Figure 1(a), a honeycomb formed body 70 including through-holes that should be plugged is a columnar body in which a large number of through-holes 71 extending in a Z direction are arranged in substantially parallel with respect to the Z direction. In the honeycomb formed body 70, the shape of a sidewall 70c forming a side surface is a columnar shape. As shown in Figure 1(b), the honeycomb formed body 70 includes a large number of (e.g., one hundred or more) standard-shaped through-holes 71a, the cross sectional shape of which is a square, in the center in the radial direction and includes a plurality of special-shaped through-holes 71b, the cross sectional shapes of which are imperfect shapes rather than the square, in the outermost circumferential portion in the radial direction.

The standard-shaped through-holes 71a are arranged in a square configuration viewed from an end face 70e in the Z-axis direction in the honeycomb formed body 70, i.e., numerously arranged in a matrix shape in the center in the end face 70e of the honeycomb formed body 70 such that the center axes of the standard-shaped through-holes 71a are respectively located at the vertexes of squares and adjacent sides of the standard-shaped through-holes 71a are parallel to each other. The size of the squares of the cross sections of the standard-shaped through-holes 71a can be, for example, 0.8 to 2.5 mm on one side. However, in this embodiment, the size and the cross sectional area of the squares of the standard-shaped through-holes 71 a are substantially the same.

The special-shaped through-holes 71b are equivalent to the above-mentioned through-holes with the imperfect shape. The special-shaped through-holes 71b are plurally arranged along the sidewall 70c of the honeycomb formed body 70 and arrange to surround the large number of standard-shaped through-holes 71a. Since a part of the special-shaped through-holes 71b is formed by the sidewall 70c, the cross sectional shapes of the special-shaped through-holes 71b are not a square. Further, the shapes of the special-shaped through-holes 71 b are not uniform each other depending on the shape of the sidewall 70c and positions in the sidewall 70c and are different according to places. However, usually, the cross sectional areas of all the special-shaped through-holes 71b are smaller than the cross sectional area of the standard-shaped through-holes 71a.

The thickness of partition walls 70w between the standard-shaped through-holes 71a, between the special-shaped through-holes 71b, and between the standard-shaped through-holes 71a and the special-shaped through-holes 71 b can be set to, for example, 0.05 to 0.5 mm. The thickness of the sidewall 70c is preferably larger than the thickness of the partition walls 70w and can be set to, for example, 0.1 to 3.0 mm.

In Figure 1(a), the length in the Z direction in which the through-holes 71 of the honeycomb formed body 70 extend is not specifically limited. However, the length can be set to, for example, 40 to 350 mm.

An outer diameter d1 of the honeycomb formed body 70 is not specifically limited. However, the outer diameter d1 can be set to, for example, 100 to 320 mm. The outer diameter d1 of the honeycomb formed body 70 fluctuates because of various factors during manufacturing of the honeycomb formed body 70. For example, when it is attempted to mass-produce a honeycomb formed body with the outer diameter d1 of 160 mm, the outer diameter d1 fluctuates in a range of about 154 to 166 mm (± 3.8% with respect to a target value). Likewise, when an extrusion condition is changed or a constituent material is changed, the outer diameter d1 fluctuates.

The material of the honeycomb formed body 70 is not specifically limited. However, from the viewpoint of high-temperature resistance, a ceramic material is preferable. Examples of the material include alumina, silica, mullite, cordierite, glass, an oxide such as aluminum titanate, silicon carbide, silicon nitride, and metal. Note that the aluminum titanate can further include magnesium and/or silicon. Such a honeycomb formed body 70 is usually porous.

The honeycomb formed body 70 may be a green formed body (an unsintered formed body) that changes to the ceramic material by being sintered later. The green formed body includes an inorganic compound source powder, which is a ceramic raw material, an organic binder such as methyl cellulose, and an additive that is added according to necessity.

For example, in the case of a green formed body of aluminum titanate, the inorganic compound source powder includes aluminum source powder such as α alumina powder and titanium source powder such as titania powder of an anatase type or a rutile type and can further include, according to necessity, magnesium source powder such as magnesia powder or magnesia spinel powder and/or silicon source powder such as silicon oxide powder or glass flit.

Examples of the organic binder include celluloses such as methylcellulose, carboxy methylcellulose, hydroxylalkyl methylcellulose, and sodium carboxyl methylcellulose, alcohols such as polyvinyl alcohol, and lignosulfonate.

Examples of the additive include a pore-forming agent, a lubricant and a plasticizer, a dispersant, and a solvent.

Examples of the pore-forming agent include a carbon material such as graphite, resins such as polyethylene, polypropylene, and polymethylmethacrylate, plant materials such as starch, nut shells, walnut shells, and corn, ice, and dry ice.

Examples of the lubricant and the plasticizer include alcohols such as glycerin, higher fatty acid such as caprylic acid, lauric acid, palmitic acid, arachidic acid, oleic acid, and stearic acid, metal stearate such as aluminum stearate, and polyoxyalkylene alkyl ether.

Examples of the dispersant include inorganic acid such as nitric acid, hydrochloric acid, and sulfuric acid, organic acid such as oxalic acid, citric acid, acetic acid, malic acid, and lactic acid, alcohols such as methanol, ethanol, and propanol, and surfactants such as ammonium polycarbonate.

Examples of the solvent can be used are alcohols such as methanol, ethanol, butanol, and propanol, glycols such as propylene glycol, polypropylene glycol, and ethylene glycol, and water.

The honeycomb formed body 70 can be manufactured by extrusion-molding a raw material mixture obtained by mixing the materials explained above. In the extrusion molding, the honeycomb compact 70 can be obtained by extruding the raw material mixture from an extruder including an outlet opening corresponding to the cross sectional shape of the partition walls 70w, drying the raw material mixture according to necessity, and cutting the raw material mixture at desired length.

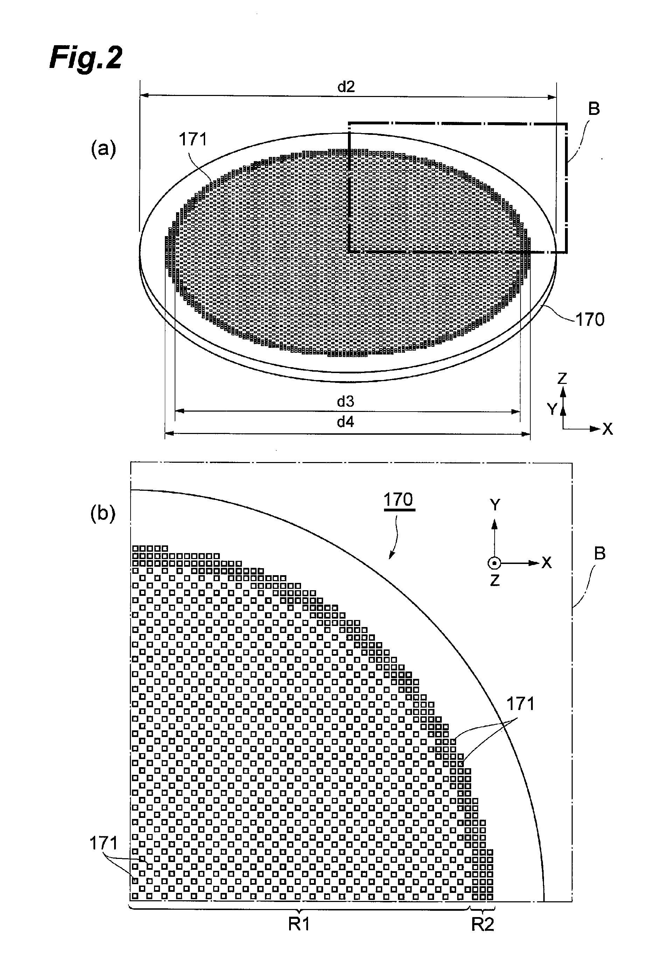

A mask 170 shown in Figures 2(a) and 2(b) is used for plugging desired through-holes 71 of the honeycomb formed body 70 shown in Figure 1. The mask 170 is a circular plate-like member. The mask 170 plurally includes openings 171 piercing through the mask 170 in the thickness direction. The material of the mask 170 is not specifically limited. Examples of the material include metal and resin. The thickness of the mask is not specifically limited. However, the thickness is preferably, for example, 0.1 to 3.0 mm.

The shape of the openings 171 is a square corresponding to the standard-shaped through-holes 71a of the honeycomb formed body 70. The openings 171 are arranged in a zigzag configuration in a center region R1 of the mask 170. In a state in which the mask 170 is positioned and arranged on the end face of the honeycomb formed body 70, the openings 171 are arranged to be opposed to only a plurality of the through-holes 71 not adjacent to one another in the up down and left right directions among a plurality of the through-holes 71 arranged in a square configuration. The openings 171 are arranged in a minute configuration in the same array as the through-holes 71 of the honeycomb formed body 70 in a circumferential edge region R2 of the mask 170. In a state in which the mask 170 is positioned and arranged on the end face of the honeycomb formed body 70, the openings 171 are arranged to be respectively opposed to the plurality of through-holes 71 arranged in the square configuration. Note that the shape of the openings 171 is not limited to the square. However, from the viewpoint of filling properties of a paste-like plugging material, the shape is preferably a shape similar to and smaller than the shape of the standard-shaped through-holes 71a.

In the mask 170, a diameter d3 of the center region R1, where the openings 171 are arranged in the zigzag configuration, is set smaller than the outer diameter d1 of the honeycomb formed body 70. This is for the purpose of opposing at least a part of the circumferential edge region R2, where the openings 171 are arranged in the minute configuration, to the circumferential edge portion of the honeycomb formed body 70 and making it easy to plug all the special-shaped through-holes 71b of the honeycomb formed body 70. In the mask 170, a diameter d4 of an entire region where the openings 171 are formed including the circumferential edge region R2, where the openings 171 are arranged in the minute configuration, is equal to or larger than the outer diameter d1 of the honeycomb formed body 70. Among the openings 171 arranged in the circumferential edge region R2, the openings 171 located further on the outer side than the outer circumference of the honeycomb formed body 70 are covered by a ring during plugging to prevent the plugging material from entering the openings 171.

The opening area of the openings 171 is preferably equal to or larger than 0.2 mm² and smaller than 90% of the opening area of the standard-shaped through-holes 71a that should be plugged by the openings 171. When the opening area of the openings 171 is smaller than 0.2 mm², the plugging material less easily passes through the openings 171. In some case, a predetermined amount of the plugging material cannot be supplied into the through-holes 71. The opening area of the openings 171 is preferably equal to or larger than 0.2 mm² and more preferably equal to or larger than 0.25 mm².

On the other hand, when the opening area of the openings 171 is equal to or larger than 90% of the opening area of the standard-shaped through-holes 71 a, if the positions of the openings 171 and the position of the openings of the through-holes 71 slightly shift from each other, in some case, the plugging material cannot be supplied into predetermined through-holes 71 and is supplied to the through-holes 71 in the vicinity that should not be plugged. The opening area of the openings 171 is preferably smaller than 80% of the opening area of the standard-shaped through-holes 71 a and more preferably smaller than 60% of the opening area of the standard-shaped through-holes 71a.

When the opening diameter of the openings 171 changes in the thickness direction of the mask 170, for example, when the openings 171 are formed in a taper shape and the opening diameter gradually decreases toward the end face of the honeycomb formed body 70, the opening area means the opening area of the openings 171 on the surface of the mask 170 on the side in contact with the end face of the honeycomb formed body 70.

An aspect ratio of the contour of the opening 171 is preferably equal to or smaller than 1.5 and preferably equal to or smaller than 1.2. The aspect ratio of the contour is defined as long side length/short side length when the contour of the opening is surrounded by a rectangle (including a square) with a minimum area that circumscribes the opening.

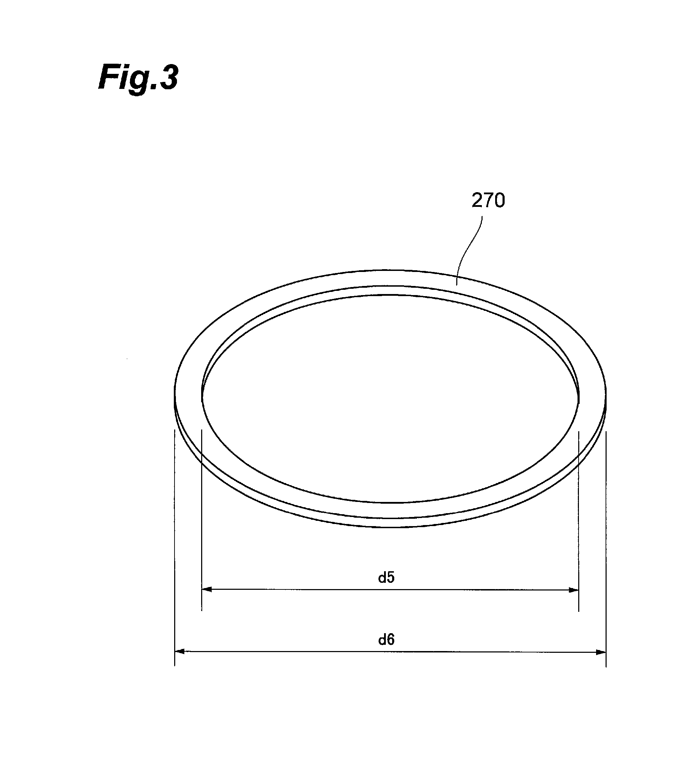

A ring 270 shown in Figure 3 is arranged on the mask 170 to cover the openings 171 of the mask 170 located further on the outer side than the outer circumference of the honeycomb formed body 70 during plugging. The ring 270 is a plate-like member with an annular shape. The material of the ring 270 is not specifically limited. Examples of the material include metal and resin. The thickness of the ring 270 is not specifically limited. However, the thickness is preferably, for example, 0.05 to 5.0 mm.

The ring 270 is preferably fixed to be closely attached to the surface of the mask 170. A method for fixing the ring 270 is not specifically limited. It is possible to use, for example, a method for fixing the ring 270 using adhesive boding by an adhesive or a tackifier, or a method for fixing the ring 270 using an adhesive tape, or a method for fixing the ring 270 using a jig.

An inner diameter d5 of the ring 270 is set substantially the same as the outer diameter d1 of the honeycomb formed body 70 including the through-holes that should be plugged. "Substantially the same" means that the inner diameter d5 of the ring 270 and the outer diameter d1 of the honeycomb formed body 70 coincide with each other enough for preventing the plugging material from spreading out further to the outer side than the outer circumference of the honeycomb formed body 70 during plugging and enabling the plugging material to be supplied to the through-holes 71 that should be plugged in the vicinity of the sidewall of the honeycomb formed body 70. For example, if a difference between the inner diameter d5 of the ring 270 and the outer diameter d1 of the honeycomb formed body 70 is equal to or smaller than 2.5 mm, the plugging material does not ooze out further to the outer side than the outer circumference of the honeycomb formed body 70 and the plugging material can be supplied to the through-holes 71 that should be plugged in the vicinity of the sidewall of the honeycomb formed body 70. Because of the same reason, the difference between the inner diameter d5 of the ring 270 and the outer diameter d1 of the honeycomb formed body 70 is more preferably equal to or smaller than 1.5 mm. As the ring 270, it is sufficient to prepare a plurality of rings with different inner diameters d5 and select and use an appropriate ring according to the outer diameter d1 of the honeycomb formed body 70 including the through-holes that should be plugged.

An outer diameter d6 of the ring 270 is not specifically limited. However, the outer diameter d6 is preferably equal to or larger than the diameter d4 of the entire region where the openings 171 of the mask 170 are formed and preferably equal to or smaller than an outer diameter d2 of the mask 170.

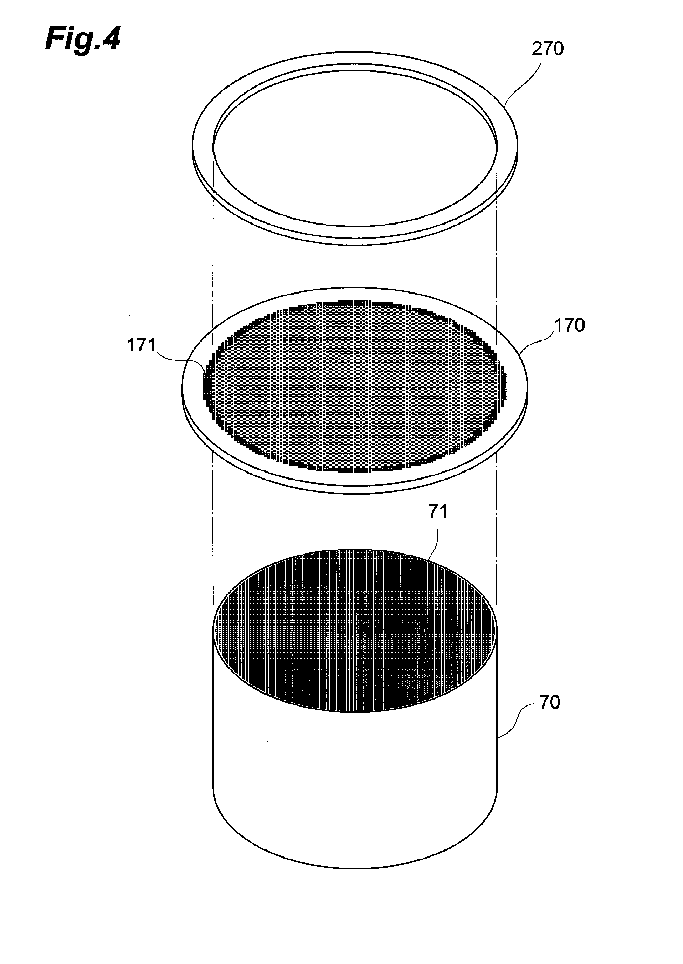

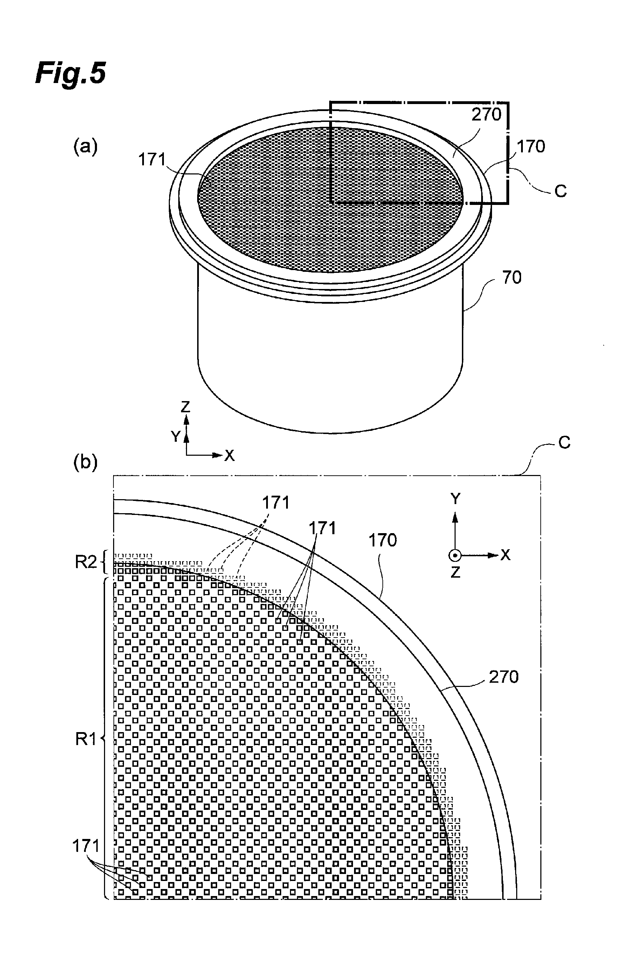

Figure 4 is a perspective view showing an arrangement relation among the honeycomb formed body 70, the mask 170, and the ring 270. Figure 5(a) is a perspective view showing a state in which the mask 170 and the ring 270 are arranged on the end face of the honeycomb formed body 70 according to the arrangement relation shown in Figure 4. When the mask 170 is arranged on the end face of the honeycomb formed body 70, a method for positioning the mask 170 with respect to the honeycomb formed body 70 is not specifically limited. For example, it is possible to position the mask 170 by viewing the partition walls, the through-holes, the sidewall, and the like of the honeycomb formed body 70 through visual observation or the like from the openings of the mask 170. The ring 270 only has to be arranged such that the inner circumference of the ring 270 and the outer circumference of the honeycomb formed body 70 coincide with each other. After the ring 270 is fixed to the mask 170, the ring 270 and the mask 170 may be arranged on the end face of the honeycomb formed body 70.

Figure 5(b) is an enlarged view of a portion C of the end face shown in Figure 5(a). The diameter d3 of the center region R1 of the mask 170 is set smaller than the outer diameter d1 of the honeycomb formed body 70, i.e., the inner diameter d5 of the ring 270. Consequently, as shown in Figure 5(b), at least a part of the circumferential edge region R2 where the openings 171 are arranged in the minute configuration in the mask 170 is exposed without being covered by the ring 270. Since the exposed circumferential edge region R2 is opposed to the circumferential edge portion of the honeycomb formed body 70, it is easy to plug the special-shaped through-holes 71b of the honeycomb formed body 70.

In a state in which the honeycomb formed body 70, the mask 170, and the ring 270 are arranged as explained above, the plugging material is supplied to the inner side of the ring 270 and filled in the through-holes 71 of the honeycomb formed body 70 via the openings 171 of the mask 170. A method for filling the plugging material in the through-holes 71 is not specifically limited. For example, the plugging material supplied onto the mask 170 may be squeezed into the through-holes 71 via the openings 171 using a squeezee or may be pushed into the through-holes 71 by a piston.

The plugging material is not specifically limited as long as the plugging material can close end portions of the through-holes 71 of the honeycomb formed body 70. However, the plugging material is preferably liquid. Examples of the plugging material include slurry including a ceramic material or a ceramic raw material, a binder, a lubricant, and a solvent.

Examples of the ceramic material include the constituent material of the honeycomb formed body and a raw material of the constituent material.

Examples of the binder include organic binders including celluloses such as methylcellulose, carboxy methylcellulose, hydroxylalkyl methylcellulose, and sodium carboxyl methylcellulose, alcohols such as polyvinyl alcohol, and lignin sulfonate. An amount of use of the binder can be set to, for example, 0.1 to 10 mass % when the plugging material is 100 mass %.

Examples of the lubricant include alcohols such as glycerin, higher fatty acid such as caprylic acid, lauric acid, palmitic acid, arachidic acid, oleic acid, and stearic acid, metal stearate such as aluminum stearate, and polyoxyalkylene alkyl ether. An amount of addition of the lubricant is usually 0 to 10 mass %, preferably 1 to 10 mass %, and more preferably 1 to 5 mass % with respect to 100 mass % of the plugging material.

As the solvent, for example, alcohols such as methanol, ethanol, butanol, and propanol, glycols such as propylene glycol, polypropylene glycol, and ethylene glycol, and water can be used. Above all, water is desirable. More preferably, deionized water is used because the deionized water includes little impurities. An amount of use of the solvent can be set to, for example, 15 to 40 mass % when the plugging material is 100 mass %.

After one end face (a first end face) of the honeycomb formed body 70 is plugged by the method explained above, an end face on the opposite side (a second end face) is plugged by the same method. At this point, as a mask used for plugging the second end face, a mask with the same pattern as the mask 170 used for plugging the first end face only has to be used. On the second end face, the mask is arranged such that the openings 171 of the mask are placed in portions opposed to the through-holes 71 not plugged on the one end face side of the center region R1. Consequently, a honeycomb formed body is obtained that has structure in which the through-holes 71 plugged on the first end face side are opened on the second end face side and the through-holes 71 plugged on the second end face side are opened on the first end face side. The special-shaped through-holes 71b at the circumferential edge portion of the honeycomb formed body and, depending on a case, the standard-shaped through-holes 71a in the vicinity of the special-shaped through-holes 71b are plugged on both the first and second end faces.

It is possible to manufacture a honeycomb structure (a honeycomb filter structure) by, for example, drying and firing the honeycomb formed body 70 in which the end portions of the through-holes 71 are plugged as explained above. The obtained honeycomb structure can be processed into a desired shape by grinding or the like.

The preferred embodiment of the present invention is explained above. However, the present invention is not limited to the embodiment and various modified forms are possible. For example, the arrangement of the standard-shaped through-holes 71a of the honeycomb formed body 70 does not have to be the square configuration and may be, for example, a triangular configuration or a zigzag configuration. In this case, the number and the positions of the openings 171 of the mask 170 can be changed according to the arrangement of the standard-shaped through-holes 71 a and the special-shaped through-holes 71b surrounding the standard-shaped through-holes 71a.

The cross sectional shape of the standard-shaped through-holes 71a of the honeycomb formed body 70 does not have to be the square and may be, for example, a rectangle, a triangle, a polygon, or a circle. These shapes may be mixed. For example, the standard-shaped through-holes 71a of the honeycomb formed body 70 are circles and the circles are arrayed in a regular triangular shape. That is, the centers of the standard-shaped through-holes 71a may be respectively arranged at the vertexes of an imaginary regular triangle. Through-holes with different areas may be mixed in the standard-shaped through-holes 71a.

The external shape of the mask 170 is not limited to the circle and can be an arbitrary shape. For example, the external shape can be an ellipse, a rectangle, a triangle, or a polygon such as a hexagon. In particular, a square, a regular triangle, or a regular polygon such as a regular hexagon is desirable.

Similarly, the external shape of the ring 270 is not limited to the circle. Like the mask 170, the external shape can be an arbitrary shape. However, the shape of the inner circumference of the ring 270 needs to be matched with the external shape of the honeycomb formed body 70.

The openings 171 of the circumferential edge region R2 of the mask 170 does not always have to be arranged in the minute configuration and may be arranged in the zigzag configuration as in the center region R1.

The honeycomb structure manufactured by the manufacturing method according to the present invention can be suitably applied to, for example, an exhaust gas filter used for exhaust gas purification of an internal combustion engine such as a diesel engine and a gasoline engine, a catalyst support, a filtration filter used for filtering of drinks such as beer, a ceramics filter such as a selective permeation filter for selectively allowing gas components, for example, carbon monoxide, carbon dioxide, nitrogen, and oxygen generated during oil refining to permeate.

### Industrial Applicability

As explained above, according to the present invention, it is possible to provide a method for manufacturing a honeycomb structure with which it is possible to flexibly cope with a change in the outer diameter of a honeycomb formed body including through-holes that should be plugged, a plugging failure less easily occurs, and it is possible to easily manufacture a honeycomb structure in which desired through-holes are plugged.

### Reference Signs List

70 ... honeycomb formed body, 71 ... through-holes, 71a ... standard-shaped through-holes, 71b ... special-shaped through-holes, 70c ... sidewall, 70w ... partition walls, 170 ... mask, 171 ... openings, 270 ... ring.

## Claims

1. A method for manufacturing a honeycomb structure comprising:
a step for arranging a mask including a plurality of openings on an end face of a columnar honeycomb formed body including a plurality of through-holes such that the plurality of openings are respectively opposed to the plurality of through-holes of the honeycomb formed body and arranging a ring having an inner diameter substantially the same as an outer diameter of the honeycomb formed body on a surface on an opposite side of the honeycomb formed body side of the mask to cover the openings of the mask located further on an outer side than an outer circumference of the honeycomb formed body; and
a step of supplying a plugging material to an inner side of the ring and filling the plugging material in the through-holes of the honeycomb formed body via the openings of the mask.

2. The method for manufacturing a honeycomb structure according to claim 1, wherein the openings are provided at a circumferential edge portion of the mask in a same array as the through-holes of the honeycomb formed body, and the mask is arranged such that the circumferential edge portion of the mask is opposed to a circumferential edge portion of the honeycomb formed body.
